# EUROPEAN PATENT SPECIFICATION

(11) **EP 3 032 913 B1**
(45) Date of publication and mention of the grant of the patent: **21.02.2018**
(21) Application number: 14833972.4
(22) Date of filing: 07.08.2014
(51) Int. Cl.: H04L 5/00, H04W 80/02

(54) **MOBILE STATION APPARATUS**
DRAHTLOSE MOBILSTATION
STATION MOBILE SANS FIL

(30) Priority: 09.08.2013 JP 2013166580
(43) Date of publication of application: 15.06.2016
(73) Proprietor: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); UCHINO, Tooru, Tokyo 100-6150 (JP); ABETA, Sadayuki, Tokyo 100-6150 (JP)
(74) Representative: Hoffmann Eitle
(86) International application number: PCT/JP2014/070856
(87) International publication number: WO 2015/020145

(56) References cited:
- EP-A1- 2 600 547
- EP-A2- 1 566 925
- US-A1- 2009 046 648
- US-A1- 2012 008 547
- US-A1- 2013 121 301
- 3GPP TR 36.842 V0.2.0 May 2013, pages 26 - 27, XP055261171 Retrieved from the Internet: <URL:http://www.3gpp.org/DynaReport/36842. htm> [retrieved on 2013-06-07]
- HUAWEI ET AL.: 'RAN2 Impacts of Inter-NodeB HSDPA Multipoint Transmission' 3GPP TSG-RAN WG2 MEETING #73BIS R2-112050 15 April 2011, pages 1 - 5, XP055261179 Retrieved from the Internet: <URL:http://www.3gpp.org/ftp/tsg_ran/WG2_RL 2/TSGR2_ 73bis/Docs/R2-112050.zip>
- QUALCOMM INCORPORATED: 'On Inter-site Multi- Point Transmission in HSDPA' 3GPP TSG RAN WG2 MEETING #75BIS R2-115196 14 October 2011, pages 1 - 5, XP050540985 Retrieved from the Internet: <URL:http://www.3gpp.org/ftp/tsg_ran/WG2_RL 2/TSGR2 75bis/Docs/R2-115196.zip>
- INTERDIGITAL COMMUNICATIONS: "User Plane Architecture for Dual-Connectivity", 3GPP DRAFT; R2-131327 USER PLANE ARCHITECTURE FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Chicago, USA; 20130415 - 20130419 6 April 2013 (2013-04-06), XP050699485, Retrieved from the Internet: URL:http://www.3gpp.org/ftp/tsg_ran/WG2_RL 2/TSGR2_81bis/Docs/ [retrieved on 2013-04-06]
- NTT DOCOMO ET AL: "Discussion on U-plane architecture for dual connectivity", 3GPP DRAFT; R2-130324_DISCUSSION ON U-PLANE ARCHITECTURE FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. St. Julian; 20130128 - 20130201 18 January 2013 (2013-01-18), XP050668065, Retrieved from the Internet: URL:http://www.3gpp.org/ftp/tsg_ran/WG2_RL 2/TSGR2_81/Docs/ [retrieved on 2013-01-18]

## Description

### TECHNICAL FIELD

The present invention relates to a mobile station and a radio base station.

### BACKGROUND ART

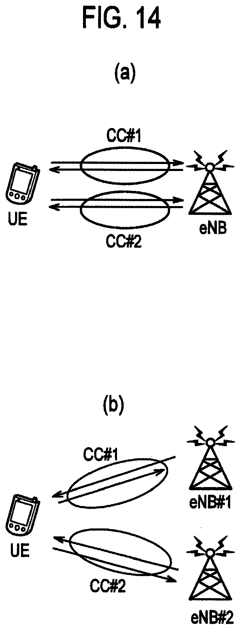

As illustrated in Fig. 14 (a), in CA (Carrier Aggregation) specified by LTE (Long Term Evolution) Release-10, a high throughput is achievable by performing simultaneous communications using a CC (Component Carrier) #1 and a CC#2 under a same radio base station eNB.

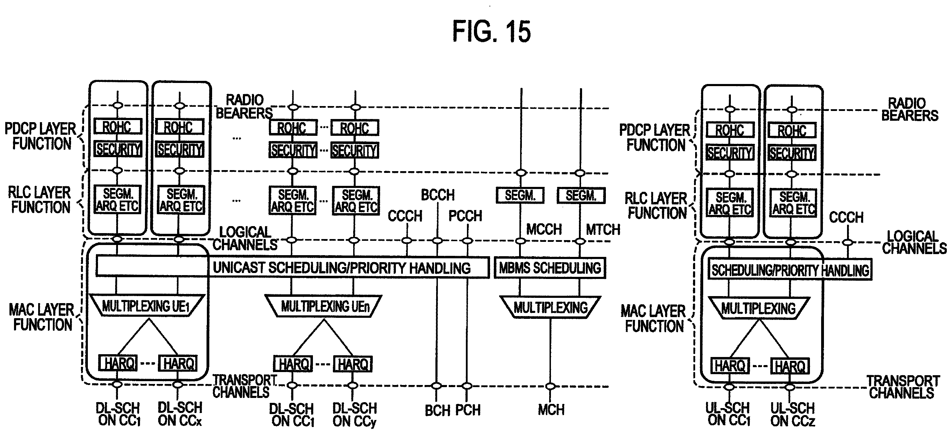

Fig. 15 illustrates a configuration of a layer 2 function in a radio base station eNB to achieve such CA.

As illustrated in Fig. 15, the layer 2 function is configured such that PDCP (Packet Data Convergence Protocol) layer function (PDCP entity) and RLC (Radio Link Control) layer function (RLC entity) are provided dedicatedly to each EPC (Evolved Packet System) bearer in each of an uplink and a downlink for one mobile station UE.

In other words, the layer 2 function is configured to set the PDCP layer function and RLC layer function dedicated to each EPS bearer.

In addition, the layer 2 function is configured to multiplex the multiple bearers in a MAC (Media Access Control Layer function (MAC entity)).

That is, the layer 2 function is configured to set one MAC layer function for each of the uplink and the downlink concerning one mobile station UE.

In addition, the layer 2 function in the mobile station UE for achieving such CA is configured such that one MAC layer function is provided for each of the uplink and the downlink, and PDCP layer function and RLC layer function are provided dedicatedly to each EPS bearer.

On the other hand, in LTE Release-12, there had been discussed "Inter-node UP aggregation" to which CA by LTE Release-10 is extended to perform simultaneous communications using the CC#1/CC#2 under different radio base stations eNB#1/eNB#2 so as to achieve a high throughput as illustrated in Fig. 14(b) (Non-patent document 1).

For example, when all CCs cannot be accommodated in a single radio base station eNB, the "Inter-node UP aggregation" has to be performed in order to achieve a throughput equivalent to that of LTE Release 10.

Document US 2012/008547 A1 describes a relay station, a base station, a relay method and a communication method. In a MAC layer, a MAC PDU which is transmitted by a mobile station to the relay station includes a MAC header including identification information of the mobile station and UE data.

Document EP 2 600 547 A1 describes a wireless access system supporting multicarrier aggregation. The multiple carriers indicate aggregation of CCs (or CA). CA refers to not only aggregation of contiguous carriers but also aggregation of non-contiguous carriers. The goal of multicarrier aggregation in which two or more CCs are aggregated is to support up to a bandwidth of 100 MHz. A method for managing a plurality of carriers in a plurality of MAC layers in an LTE system is described. A 1-to-1 mapping relationship between MAC layers and physical layers is described, when a transmitter supports multiple carriers and when a receiver supports multiple carriers.

Document US 2009/004-6648 A1 describes an apparatus and a method for avoiding waste of resources by dynamically allocating a length of a Logical Channel IDentification (LCID) of a header included in a Media Access Control (MAC) Protocol Data Unit (PDU). The apparatus includes a header generator for evaluating a MAC Service Data Unit (SDU) to be multiplexed and for dynamically allocating LCID information according to the evaluated MAC SDU, when radio bearer information is modified. Accordingly, the conventional problem can be solved in which a large number of bits are unnecessarily wasted since the length of the LCID is fixedly allocated or in which logical channels cannot be sufficiently used.

Document EP 1 566 925 A2 describes a method for improving the data processing speed in a mobile communication system employing a High Speed Downlink Packet Access (HSDPA). A data unit for the HSDPA services is generated by adding a field for identifying a destination logical channel to the header of the data unit and inserting a header padding field into the header, and transmitting the generated data unit.

Document Interdigital Communications: "User Plane Architecture for Dual-Connectivity", 3GPP DRAFT; R2-131327, 3GPP, vol. RAN WG2, no. Chicago, USA; 20130415 - 20130419 describes a user plane architecture for dual-connectivity. The user plane architecture may be provided with a MAC layer for a small cell eNB and a macro eNB.

Document NTT DOCOMO et al. "Discussion on U-plane architecture for dual connectivity", 3GPP DRAFT; R2-130324, 3GPP, vol. RAN WG2, no. St. Julian; 20130128 - 20130201 describes U-plane architecture for dual connectivity. UEs have dual connectivity to macro and small cell layers served by different or same carrier.

### PRIOR ART DOCUMENT

### NON-PATENT DOCUMENT

Non-patent document 1: R2-132250 contribution to 3GPP

### SUMMARY OF THE INVENTION

To achieve "Inter-node UP aggregation", a mobile station UE has to establish bearers for transmitting and receiving data to/from different radio base stations eNB.

However, there has been a problem that "Inter-node UP aggregation" cannot be achieved because the existing mobile station UE is provided with only one MAC layer function in the layer 2 function, and cannot establish bearers with different radio base stations eNB.

Hence, the invention has been made with a view to the above-described problem, and accordingly has an objective to provide a mobile station and a radio base station which are capable of achieving "Inter-node UP aggregation".

The invention is defined by the appended claim. Any other reference to embodiments is to be interpreted as examples useful for understanding the invention.

### BRIEF DESCRIPTION OF THE DRAWINGS

[Fig. 1] Fig. 1 is an overall configuration diagram of a mobile communication system according to a first embodiment of the invention.
[Fig. 2] Fig. 2 is a diagram illustrating a flow of U-plane data in the mobile communication system according to the first embodiment of the invention.
[Fig. 3] Fig. 3 is a diagram illustrating protocol stacks of radio base stations eNB#1/eNB#2 according to the first embodiment of the invention.
[Fig. 4] Fig. 4 is a diagram illustrating functions of a mobile station UE according to the first embodiment of the invention.
[Fig. 5] Fig. 5 is a sequence diagram illustrating an operation of the mobile communication system according to the first embodiment of the invention.
[Fig. 6] Fig. 6 is a diagram illustrating protocol stacks of radio base stations eNB#1/eNB#2 according to a modification of the first embodiment of the invention.
[Fig. 7] Fig. 7 is a diagram illustrating protocol stacks of the radio base stations eNB#1/eNB#2 according to the modification of the first embodiment of the invention.
[Fig. 8] Fig. 8 is a diagram illustrating protocol stacks of the radio base stations eNB#1/eNB#2 according to the modification of the first embodiment of the invention.
[Fig. 9] Fig. 9 is a diagram illustrating a flow of U-plane data in a mobile communication system according to a second embodiment of the invention.
[Fig. 10] Fig. 10 is a diagram illustrating protocol stacks of radio base stations eNB#1/eNB#2 according to the second embodiment of the invention.
[Fig. 11] Fig. 11 is a diagram illustrating functions of a mobile station UE according to the second embodiment of the invention.

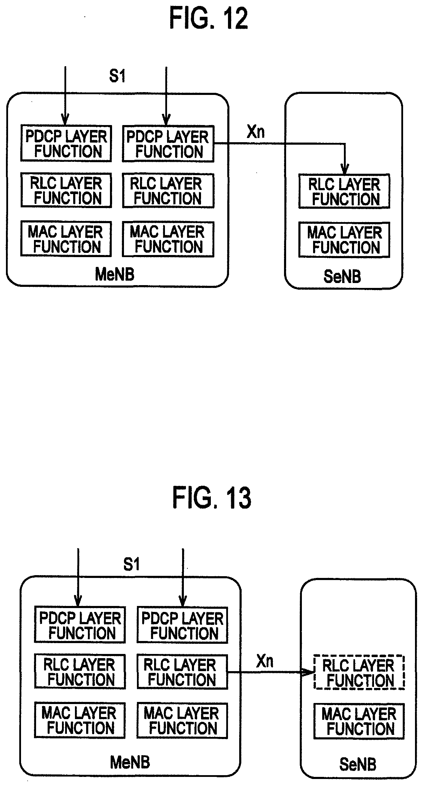

[Fig. 12] Fig. 12 is a diagram illustrating protocol stacks of radio base stations eNB#1/eNB#2 according to a modification of the second embodiment of the invention.
[Fig. 13] Fig. 13 is a diagram illustrating protocol stacks of the radio base stations eNB#1/eNB#2 according to the modification of the second embodiment of the invention.
[Fig. 14] Fig. 14 illustrates a configuration example of conventional component carriers.
[Fig. 15] Fig. 15 is a configuration diagram of a conventional layer 2 function in a radio base station for achieving CA.

### MODES FOR CARRYING OUT THE INVENTION

### (Mobile Communication System according to First Embodiment of the Invention)

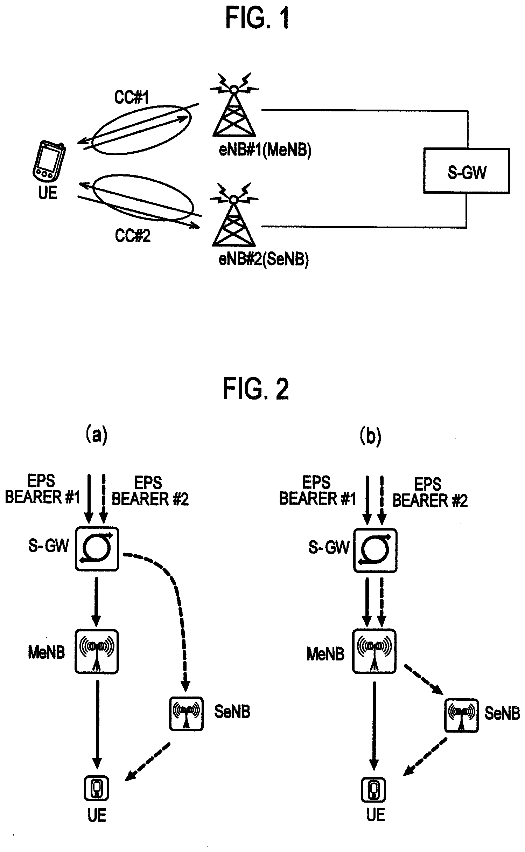

Referring to Fig. 1 to Fig. 8, a mobile communication system according to a first embodiment of the invention is described.

As illustrated in Fig. 1, the mobile communication system according to the embodiment is an LTE mobile communication system which includes a gateway device S-GW, a radio base station eNB#1, a radio base station eNB#2, and a mobile station UE.

In the mobile communication system according to the embodiment, the mobile station UE is configured to be capable of performing CA using a CC#1 under the radio base station eNB#1 and a CC#2 under the radio base station eNB#2.

In other words, the mobile communication system according to the embodiment is configured to be capable of performing "Inter-node UP aggregation".

Note that, the mobile station UE is configured to perform communications using one or multiple EPS bearers when the "Inter-node UP aggregation" is performed.

It is assumed in the mobile communication system according to the embodiment that the radio base station eNB#1 is a radio base station MeNB (Master eNB) such as a radio base station eNB which manages a macro cell and the radio base station eNB#2 is a radio base station SeNB (Secondary eNB) such as a radio base station eNB which manages a small cell.

In addition, as illustrated in Fig. 2(a) and Fig. 2(b), the mobile communication system according to the embodiment is configured such that when the "Inter-node UP aggregation" is performed, U-plane data on a same EPS bearer flows to only either one of the radio base station MeNB and the radio base station SeNB.

Here, the U-plane data may be configured to flow from the gateway device S-GW to the radio base station SeNB as illustrated in Fig. 2 (a) or may be configured to flow from the radio base station MeNB to the radio base station SeNB as illustrated in Fig. 2(b).

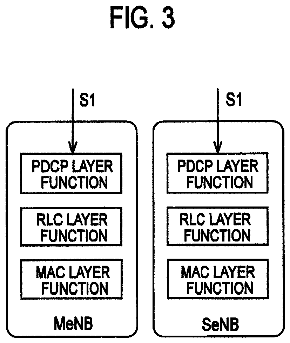

Moreover, as illustrated in Fig. 3, in the mobile communication system according to the embodiment, each of the radio base station MeNB and the radio base station SeNB includes a MAC layer function, an RLC layer function, and a PDCP layer function.

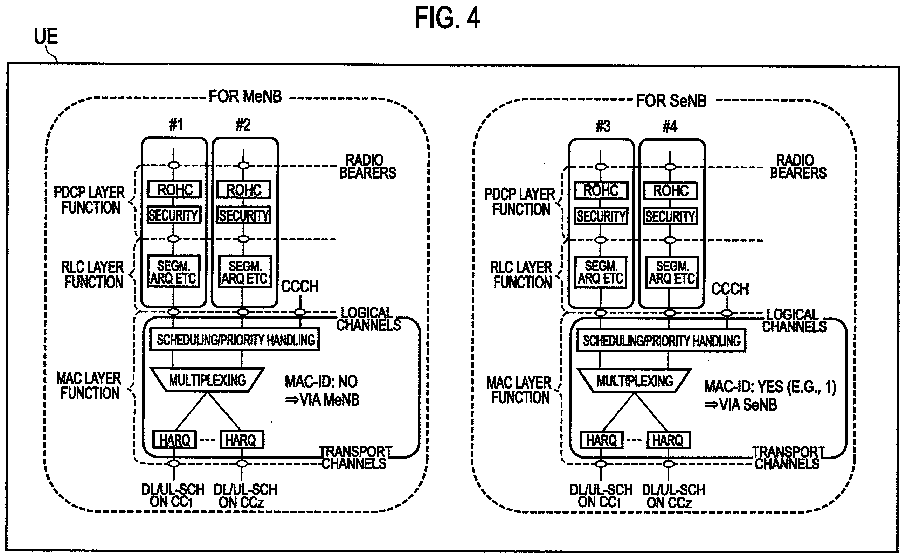

As illustrated in Fig. 4, the mobile station UE includes a MAC layer function for the radio base station MeNB and a MAC layer function for the radio base station SeNB as the layer 2 function.

In addition, the mobile station UE includes PDCP layer function and RLC layer function dedicated to each EPS bearer as the layer 2 function.

Here, in the downlink, each of the MAC layer function for the radio base station MeNB and the MAC layer function for the radio base station SeNB may be configured to determine whether or not MAC-PDU received via the physical layer function is addressed to a logical channel (EPS bearer) managed by the MAC layer function itself, based on whether or not a MAC-ID is added to a header of the MAC-PDU.

For example, the MAC layer function for the radio base station MeNB may be configured to determine that the MAC-PDU received via the physical layer function is addressed to the logical channel managed by the MAC layer function itself when the MAC-ID is not added to the header of the MAC-PDU.

According to the above feature, "backward compatibility" with the existing LTE is achievable. In other words, the MAC layer function for the radio base station MeNB may be a MAC layer function in the existing LTE.

On the other hand, the MAC layer function for the radio base station SeNB may be configured to determine that the MAC-PDU received via the physical layer function is addressed to the logical channel managed by the MAC layer function itself when the MAC-ID is added to the header of the MAC-PDU.

In such a case, the MAC layer function in the radio base station SeNB is configured to add a MAC-ID to a header of MAC-SDU to be received via an RLC layer function.

On the other hand, the MAC layer function in the radio base station MeNB is configured not to add a MAC-ID to the header of the MAC-SDU to be received via the RLC layer function.

Alternatively, each of the MAC layer function for the radio base station MeNB and the MAC layer function for the radio base station SeNB is configured to determine whether or not the MAC-PDU received via the physical layer function is addressed to the logical channel managed by the MAC layer function itself based on a value of the MAC-ID added to the header of the MAC-PDU.

Note that, the MAC-ID is configured to be notified by using an RRC layer signal such as "RRCConnectionReconfiguration" by the radio base station MeNB or the radio base station SeNB.

In addition, in the downlink, the MAC layer function for the radio base station MeNB and the MAC layer function for the radio base station SeNB may be configured to determine whether or not the MAC-PDU received via the physical layer function is addressed to the logical channel managed by the MAC layer function itself based on an LCN-ID (Logical Channel ID) which is included in the header of the MAC-PDU.

In such a case, each of the MAC layer function for the radio base station MeNB and the MAC layer function for the radio base station SeNB is configured to store the LCN-ID of the logical channel managed by the MAC layer function itself.

Here, the LCN-ID may be an LCN-ID which is used in the existing LTE.

On the other hand, in the uplink, each of the MAC layer function for the radio base station MeNB and the MAC layer function for the radio base station SeNB may be configured to determine whether or not MAC-SDU received via the RLC layer function is to be processed by the MAC layer function itself, based on whether or not the MAC-ID is added to the header of the MAC-SDU.

For example, the MAC layer function for the radio base station MeNB may be configured to determine the MAC-SDU received via the RLC layer function is to be processed by the MAC layer function itself when the MAC-ID is not added to the header of the MAC-SDU.

According to the above feature, "backward compatibility" with the existing LTE is achievable. In other words, the MAC layer function for the radio base station MeNB may be a MAC layer function in the existing LTE.

On the other hand, the MAC layer function for the radio base station SeNB may be configured to determine that the MAC-SDU received via the RLC layer function is to be processed by the MAC layer function itself when the MAC-ID is added to the header of the MAC-SDU.

Alternatively, each of the MAC layer function for the radio base station MeNB and the MAC layer function for the radio base station SeNB is configured to determine whether or not the MAC-SDU received via the physical layer function is to be processed by the MAC layer function itself based on a value of the MAC-ID added to the header of the MAC-SDU.

Moreover, in the uplink, the MAC layer function for the radio base station MeNB and the MAC layer function for the radio base station SeNB may be configured to determine whether or not the MAC-SDU received via the RLC layer function is to be processed by the MAC layer function itself based on the LCN-ID included in the header of the MAC-SDU.

In such a case, each of the MAC layer function for the radio base station MeNB and the MAC layer function for the radio base station SeNB is configured to store the LCN-ID of the logical channel managed by the MAC layer function itself.

Here, the LCN-ID may be the LCN-ID which is used in the existing LTE.

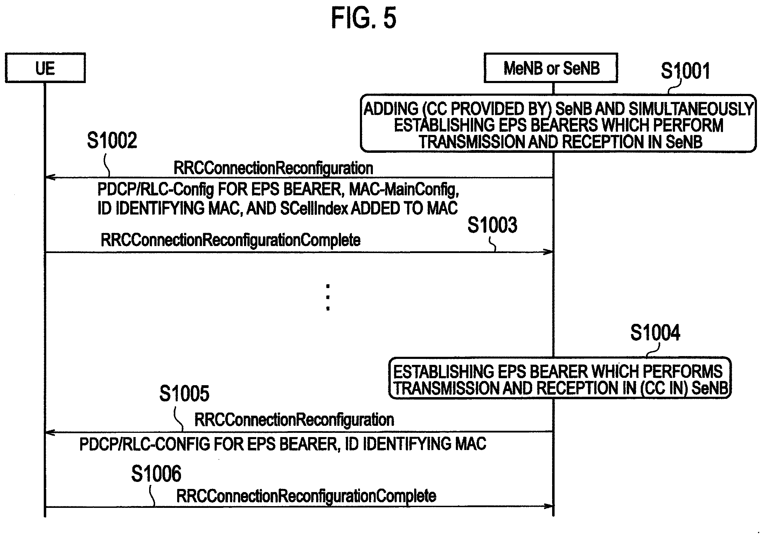

Hereinafter, an operation of the mobile communication system according to the embodiment is described by referring to Fig. 5.

As illustrated in Fig. 5, at step S1001, when the mobile station UE is in connection with the radio base station MeNB, the radio base station MeNB (or the radio base station SeNB) sets the radio base station SeNB (or the CC which is provided by the radio base station SeNB) and establishes an EPS bearer which performs transmission and reception in the radio base station SeNB.

At step S1002, the radio base station MeNB (or the radio base station SeNB) transmits "RRCConnectionReconfiguration" to the mobile station UE.

The "RRCConnectionReconfiguration" is configured to notify "PDCP/RLC Config" for the established EPS bearer, "MAC-MainConfig", "MAC-ID", "ScellIndex" added to the MAC layer function, and the like.

At step S1003, the mobile station UE transmits "RRCConnectionReconfigurationComplete" in response to the "RRCConnectionReconguration" to the radio base station MeNB (or the radio base station SeNB).

At step S1004, the radio base station MeNB (or the radio base station SeNB) establishes an EPS bearer which performs transmission and reception in the radio base station SeNB (the CC in the radio base station SeNB).

At step S1005, the radio base station MeNB (or the radio base station SeNB) transmits the "RRCConnectionReconfiguration" to the mobile station UE.

The "RRCConnectionReconfiguration" is configured to notify "PDCP/RLC Config" for the established EPS bearer, "MAC-ID", and the like.

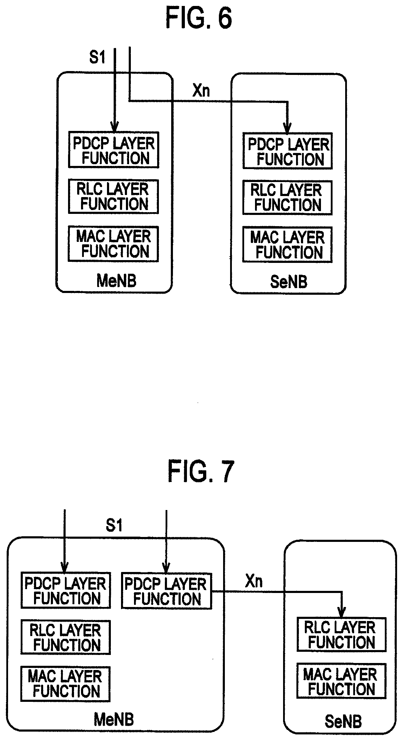

Note that, in the mobile communication system according to the embodiment, protocol stacks of the radio base station MeNB and the radio base station SeNB may be configured as illustrated in Fig. 6 to Fig. 8.

In the mobile communication system according to the embodiment, when "Inter-node UP aggregation" is started, the mobile station UE sets MAC layer functions respectively dedicated to the radio base station MeNB and the radio base station SeNB, and establishes EPS bearers to be processed by each of the MAC layer functions. Thereby, even when the "Inter-node UP aggregation" is performed, the mobile station UE is capable of properly performing an operation such as determining which EPS bearers are to be multiplexed in which MAC layer function for each radio base station eNB.

### (Mobile Communication System according to Second Embodiment of the Invention)

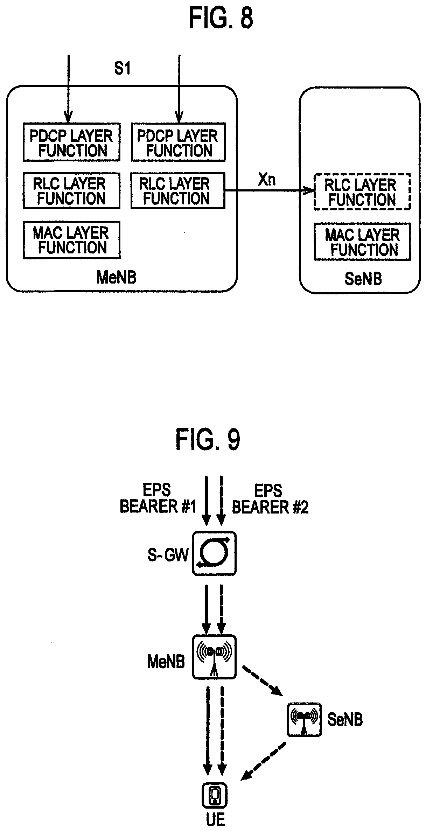

Hereinafter, by referring to Fig. 9 to Fig. 11, a mobile communication system according to a second embodiment of the invention is described by paying attention to differences from the mobile communication system according to the above-described first embodiment.

In the mobile communication system according to the embodiment, as illustrated in Fig. 9, U-plane data on a same EPS bearer (for example, U-plane data on an EPS bearer#2) is configured to flow to both of a radio base station MeNB and a radio base station SeNB when "Inter-node UP aggregation" is performed.

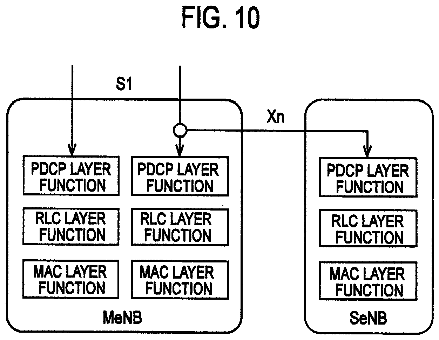

In addition, as illustrated in Fig. 10, in the mobile communication system according to the embodiment, the radio base station MeNB is configured to include a layer 2 function for an EPS bearer #1 as well as a layer 2 function for an EPS bearer #2.

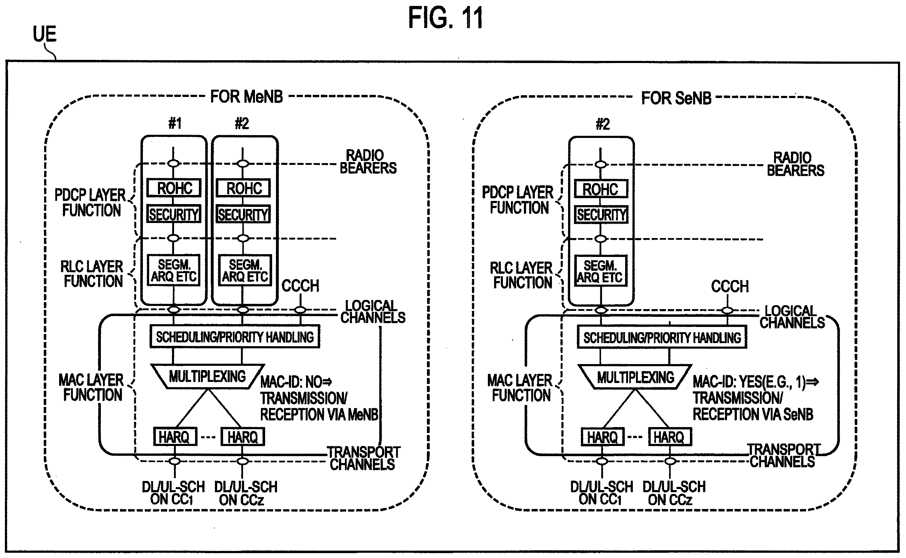

As illustrated in Fig. 11, in the mobile communication system according to the embodiment, the mobile station UE is configured to set a PDCP layer function and an RLC layer function for a same EPS bearer (in the example of Fig. 11, the EPS bearer #2) in both the layer 2 function for the radio base station MeNB and the layer 2 function for the radio base station SeNB.

In other words, both the MAC layer function for the radio base station MeNB and the MAC layer function for the radio base station SeNB are configured to use the EPS bearer #2 as a logical channel (EPS bearer) managed by the MAC layer function itself.

The foregoing features of the present embodiments may be expressed as follows.

In summary, a first feature of the present embodiments is a mobile station UE configured to be capable of performing CA (carrier aggregation) using a CC (component carrier) under a radio base station MeNB (a first radio base station) and a CC under a radio base station SeNB (a second radio base station), the mobile station UE comprising: a MAC layer function for the radio base station MeNB; and a MAC layer function for the radio base station SeNB, wherein each of the MAC layer function for the radio base station MeNB and the MAC layer function for the radio base station SeNB is configured to determine whether or not MAC-PDU received via a physical layer function is addressed to a logical channel managed by the MAC layer function itself, based on whether or not a MAC-ID (predetermined identification information) is added to a header of the MAC-PDU.

In summary, a second feature of the present embodiments is a mobile station UE configured to be capable of performing CA using a CC under a radio base station MeNB and a CC under a radio base station SeNB, the mobile station UE comprising: a MAC layer function for the radio base station MeNB; and a MAC layer function for the radio base station SeNB, wherein each of the MAC layer function for the radio base station MeNB and the MAC layer function for the radio base station SeNB is configured to determine whether or not MAC-PDU received via a physical layer function is addressed to a logical channel managed by the MAC layer function itself, based on an LCN-ID (logical channel identification information) included in a header of the MAC-PDU.

In summary, a third feature of the present embodiments is a mobile station UE configured to be capable of performing CA using a CC under a radio base station MeNB and a CC under a radio base station SeNB, the mobile station UE comprising: a MAC layer function for the radio base station MeNB; and a MAC layer function for the radio base station SeNB, wherein each of the MAC layer function for the radio base station MeNB and the MAC layer function for the radio base station SeNB is configured to determine whether or not MAC-SDU received via an RLC layer function is to be processed by the MAC layer function itself, based on whether or not a MAC-ID is added to a header of the MAC-SDU.

In summary, a fourth feature of the present embodiment is a mobile station UE configured to be capable of performing CA using a CC under a radio base station MeNB and a CC under a radio base station SeNB, the mobile station UE comprising: a MAC layer function for the radio base station MeNB; and a MAC layer function for the radio base station SeNB, wherein each the MAC layer function for the radio base station MeNB and the MAC layer function for the radio base station SeNB is configured to determine whether or not MAC-SDU received via a RLC layer function is to be processed by the MAC layer function itself, based on an LCN-ID included in a header of the MAC-SDU.

In summary, a fifth feature of the present embodiment is a radio base station eNB functioning as a radio base station SeNB in a mobile communication system in which a mobile station UE is configured to be capable of performing CA using a CC under a radio base station MeNB and a CC under the radio base station SeNB, the radio base station eNB comprising: a MAC layer function, wherein the MAC layer function is configured to add a MAC-ID to a header of a MAC-SDU to be received via an RLC layer function.

It should be noted that the foregoing operations of the mobile station UE and the radio base stations eNB#1/eNB#2 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE or the radio base station eNB#1/eNB#2. Otherwise, the storage medium and the processor may be provided as discrete components inside the mobile station UE or the radio base station eNB#1/eNB#2.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, the invention may provide a mobile station and radio base station which are capable of achieving "Inter-node UP aggregation".

### EXPLANATION OF REFERENCE NUMERALS

- S-GW: Gateway device
- eNB#1(MeNB), eNB#2(SeNB): Radio base station
- UE: Mobile station

## Claims

1. A mobile station performing carrier aggregation using a component carrier under a first radio base station and a component carrier under a second radio base station, the mobile station comprising:
a Media Access Control, MAC, entity dedicated to the first radio base station; and
a MAC entity dedicated to the second radio base station independent from the MAC entity dedicated to the first radio base station, wherein each of the MAC entity for the first radio base station and the MAC entity for the second radio base station is configured to determine whether or not Media Access Control Packet Data Unit, MAC-PDU, received via a physical layer function is addressed to a logical channel managed by the MAC entity itself, based on logical channel identification information, LCN-ID, included in a header of the MAC-PDU, and
the LCN-ID is notified by the first radio base station or the second radio base station using an Radio Resource Control, RRC, layer signal.

## Patentansprüche

1. Mobilstation, die Trägeraggregation unter Verwendung eines Komponententrägers unter einer ersten Funkbasisstation und eines Komponententrägers unter einer zweiten Funkbasisstation durchführt, wobei die Mobilstation umfasst:
ein Medien-Zugriffs-Steuerungs-, MAC-, Objekt, das der ersten Funkbasisstation zugeordnet ist; und
ein MAC-Objekt, das der zweiten Funkbasisstation unabhängig von dem MAC-Objekt zugeordnet ist, das der ersten Funkbasisstation zugeordnet ist, wobei
jedes von dem MAC-Objekt für die erste Funkbasisstation und dem MAC-Objekt für die zweite Funkbasisstation dazu konfiguriert ist, zu bestimmen, ob oder ob nicht Medien-Zugriffs-Steuerungs-Paket-Daten-Einheit, MAC-PDU, empfangen über eine physikalische Schichtfunktion an einen logischen Kanal adressiert ist, der von dem MAC-Objekt selbst verwaltet wird, auf Basis von Logischer-Kanal-Identifikationsinformation, LCN-ID, die in einem Header der MAC-PDU enthalten ist, und die LCN-ID von der ersten Funkbasisstation oder der zweiten Funkbasisstation unter Verwendung eines Funkressourcensteuerungs-, RRC-, Schichtsignals benachrichtigt wird.

## Revendications

1. Station mobile effectuant une agrégation de porteuses en utilisant une porteuse composante sous une première station de base radio et une porteuse composante sous une seconde station de base radio, la station mobile comprenant :
une entité de commande d'accès au support, MAC, dédiée à la première station de base radio ; et
une entité MAC dédiée à la seconde station de base radio indépendante de l'entité MAC dédiée à la première station de base radio, dans laquelle
chacune parmi l'entité MAC pour la première station de base radio et l'entité MAC pour la seconde station de base radio est configurée pour déterminer si l'unité de données de paquets de commande d'accès au support, MAC-PDU, reçue via une fonction de couche physique est adressée à un canal logique géré par l'entité MAC elle-même, sur la base d'informations d'identification de canal logique, LCN-ID, incluses dans un en-tête de la MAC-PDU, et les LCN-ID sont notifiées par la première station de base radio ou la seconde station de base radio en utilisant un signal de couche de commande de ressources radio, RRC.
